# EUROPÄISCHE PATENTANMELDUNG

(11) **EP 3 748 091 A1**
(43) Veröffentlichungstag der Anmeldung: **09.12.2020**
(21) Anmeldenummer: 20178824.7
(22) Anmeldetag: 08.06.2020
(51) Int. Cl.: E03C 1/04, F16B 35/04

(54) **ARMATURENBEFESTIGUNGSVORRICHTUNG ZUR BEFESTIGUNG EINER WASCHTISCH- ODER KÜCHENARMATUR IN EINEM HAHNLOCH**

(30) Priorität: 07.06.2019 DE 102019115627
(71) Anmelder: Kludi GmbH & Co. KG, 58706 Menden Sauerland (DE)
(72) Erfinder: Alonso Garcia, Miguel, 58675 Hemer (DE); Wiesendahl, Guido, 58099 Hagen (DE); Gebhart, Paul, 58730 Fröndenberg (DE); Schürmann, Julia, 58706 Menden (DE); Busche, Sandra, 58802 Balve (DE); Sommer, Frank, 58638 Iserlohn (DE); Schneider, Raimund, 59757 Arnsberg (DE)
(74) Vertreter: Tarvenkorn, Oliver

(57) **Zusammenfassung**

Eine Armaturenbefestigungsvorrichtung (100) zur Befestigung einer Waschtisch- oder Küchenarmatur (200) in einem Hahnloch (211) umfasst wenigstens:
- eine Ankerstange (20), die wenigstens über einen Teil ihrer Länge mit einem Außengewinde versehen ist und die an ihrem einen Ende mit einem Ankerkopf (22) zur Verbindung mit einem Armaturenkörper (200) versehen ist;
- eine spangenförmige Befestigungsscheibe (30), die wenigstens eine Führungsausnehmung (31) aufweist, in der die Ankerstange (20) geführt ist;
- eine Spannmutter (10) mit wenigstens einem in das Außengewinde der Ankerstange (20) eingreifenden Innengewinde (16) und mit wenigstens einem Antrieb (15);

Der Querschnitt der Ankerstange (20) über wenigstens einen Teilbereich ihrer Länge und der Querschnitt der Führungsausnehmung (31) sind derart ausgebildet und aufeinander abgestimmt, dass sie in wenigstens einer Winkellage formschlüssig zueinander ausgerichtet sind und zugleich axial gegeneinander verschiebbar sind. Der Querschnitt des Teilbereichs der Ankerstange (20) und der Querschnitt der Führungsausnehmung (31) besitzen jeweils eine gegenüber der Kreisform reduzierte, unrunde Form. In den genannten Querschnitten verbleiben ein oder mehrere kreisbogenförmige(r) Abschnitt(e) des Außengewindes, wodurch Abstützpunkte für die Führung der Spannmutter (10) gebildet sind.

## Beschreibung

Die Erfindung betrifft eine Armaturenbefestigungsvorrichtung zur Befestigung einer Waschtisch- oder Küchenarmatur in einem Hahnloch, mit den Merkmalen des Oberbegriffs des Anspruchs 1.

Wasserauslaufarmaturen für Waschbecken, Bidets und Spülen werden in der Regel mit einer Gewindestange, einer Mutter und einer Befestigungsscheibe am Untergrund befestigt. Die Befestigungsscheibe ist spangenförmig, also einseitig offen, und ähnelt oft einem Hufeisen.

In der Praxis tritt bei der Montage der bekannten Befestigungsvorrichtung das Problem auf, dass die Befestigungsscheibe per Hand ausgerichtet werden muss, damit die Armatur sicher befestigt werden kann. Dies ist schwierig durchzuführen, da die Befestigungsscheibe unter dem Waschtisch bzw. einer Küchenarbeitsplatte angeordnet werden muss und vom Monteur schlecht gesehen und schlecht gehandhabt werden kann. Auch ist der Platz zum Greifen der Befestigungsscheibe in der beschriebenen Montagesituation oftmals sehr beengt. Wenn die Scheibe jedoch nicht lagerichtig montiert ist, kontaktieren möglicherweise nur kleine Flächenbereiche der Befestigungsscheibe den Rand des Befestigungsuntergrunds am Hahnloch. Daher kann sich die Armatur nachträglich lösen.

Insbesondere beim abschließenden Festziehen der Ankermutter überträgt diese eine Torsionskraft auf die Befestigungsscheibe. Dies kann dazu führen, dass sich die Befestigungsscheibe im letzten Moment erneut verdreht und wieder gelöst und neu ausgerichtet werden muss.

Die Aufgabe der vorliegenden Erfindung besteht somit darin, eine Armaturenbefestigungsvorrichtung zur Befestigung einer Waschtisch- oder Küchenarmatur der eingangs genannten Art so zu verbessern, dass die Montage erleichtert wird und zugleich eine zuverlässige Befestigung erreicht wird.

Die Erfindung schlägt als Lösung vor, die Ankerstange am Umfang wenigstens in einem Teilbereich so auszubilden, dass sie mit der Befestigungsscheibe zusammen handhabbar und in einen Armaturenkörper einsetzbar ist und dabei in der Winkellage dieser gegenüber formschlüssig ausgerichtet ist. Dafür ist eine nicht-runde Querschnittsform erforderlich, die gleichwohl einen oder mehrere kreisbogenförmige Abschnitte mit Außengewinde besitzt. Die Gewindeabschnitte sind so angeordnet, dass genügend Abstützpunkte für die Führung der Spannmutter verbleiben. Zugleich muss die unrunde Querschnittsform immer durch Materialentfernung bzw. Einsparung im Vergleich zu einem zylindrischen Gewindestift vorgenommen werden, damit das Gewinde für die Bewegung der Spannmutter nutzbar bleibt.

Die Befestigungsscheibe hat wenigstens eine, ebenfalls unrund geformte und geometrisch an den Querschnitt der Ankerstange angepasste Ausnehmung. Somit kann die Befestigungsscheibe entlang der Ankerstange verschoben werden und ist dabei hinsichtlich ihrer Winkellage zur Ankerstange stets in der vorgegebenen Richtung ausgerichtet. Dies gilt schon während des ersten Montageschritts, bei dem es zunächst darum geht, die Mutter soweit aufzuschrauben, dass die Befestigungsscheibe an der Unterseite der Arbeitsplatte oder des Waschtisches anliegt. Dies gilt insbesondere auch beim abschließenden Festziehen.

Folgende Ausbildungen der Querschnitte von Ankerstange und Führungsausnehmung sind beispielsweise möglich:
1) eine einseitige Nut oder Abflachung und ein Gewindeabschnitt, der sich über mehr als 200° erstreckt;
2) zwei Abflachungen an gegenüberliegenden Seiten, wobei zwei Gewindeabschnitte vorhanden sind, die sich jeweils über mindestens 15° erstrecken und spiegelbildlich am Querschnitt der Ankerstange angeordnet sind;
3) drei oder mehr Abflachungen, die so verteilt sind, dass paarweise jeweils dazwischen ein Gewindeabschnitt vorhanden ist und die Gewindeabschnitte Stützpunkte für eine Mutter bilden, die in gleichmäßiger Winkelteilung wie Ecken eines Polygons angeordnet sind, also beispielsweise 3 Gewindeabschnitte, die um 120° versetzt zueinander angeordnet sind, 4 Gewindeabschnitte, die um 90° versetzt zueinander angeordnet sind, oder 5 Gewindeabschnitte, die um 72° versetzt zueinander angeordnet sind.

Denkbar sind auch Kombinationen, bei denen die Führungsausnehmung der Befestigungsscheibe mehr querschnittsreduzierte Bereiche, z.B. in Form von Abflachungen, besitzt als die Ankerstange. Dadurch kann mehr als eine relative Winkellage zwischen Befestigungsscheibe und Ankerstange formschlüssig vorgegeben werden.

Die Ausrichtung der Gewindestange im Armaturenkörper erfolgt bevorzugt durch einen gerändelten Bereich, der in eine Stufenbohrung eintaucht. Der gerändelte Bereich hat gegenüber der Bohrung ein Übermaß, so dass beim Verbinden eine Presspassung entsteht und die Gewindestange gegen Verdrehen gesichert ist.

Es ist ebenfalls denkbar, beide Gewinde an Armatur und Ankerstange bei der Fertigung voreinzustellen und so die Lage der Ankerstange zur Armatur vorzugeben.

Weiterhin ist es denkbar, die Gewindestange im Armaturenkörper zu verkleben, um so eine dauerhaft richtige Lage im Armaturenkörper zu gewährleisten.

Es sind auch weitere formschlüssige Verbindungen möglich, um die Winkellage der Gewindestange zur Armatur vorzugeben, beispielsweise Bajonettverbindungen.

Die Erfindung mit weiteren vorteilhaften Ausgestaltungen wird nachfolgend mit Bezug auf das in den Zeichnungen dargestellte Ausführungsbeispiel näher erläutert. Die Figuren zeigen jeweils eine perspektivische Ansicht, und zwar in Bezug auf die Einbaulage von schräg unten, soweit nicht anders angegeben:
- Figur 1: eine Armaturenbefestigungsvorrichtung;
- Figur 2: einen Grundkörper einer Waschtischarmatur mit Teilen der Armaturenbefestigungsvorrichtung;
- Figur 3 - 5: jeweils die in ein Hahnloch einer Möbelplatte eingesetzte Waschtischarmatur mit Teilen der Befestigungsvorrichtung
- Figur 6: eine fertig montierte Waschtischarmatur mit der Armaturenbefestigungsvorrichtung,
- Figur 7: eine abgewandelte Armaturenbefestigungsvorrichtung mit einer Waschtischarmatur;
- Figur 8: eine Spannmutter im Schnitt;
- Figur 9: eine Spannmutter in langer und gekürzter Form;
- Figur 10: ein elastomeres Zwischenelement;
- Figur 11: eine Ankerstange und
- Figur 12: Teile der Armaturenbefestigungsvorrichtung mit Zentrierring.

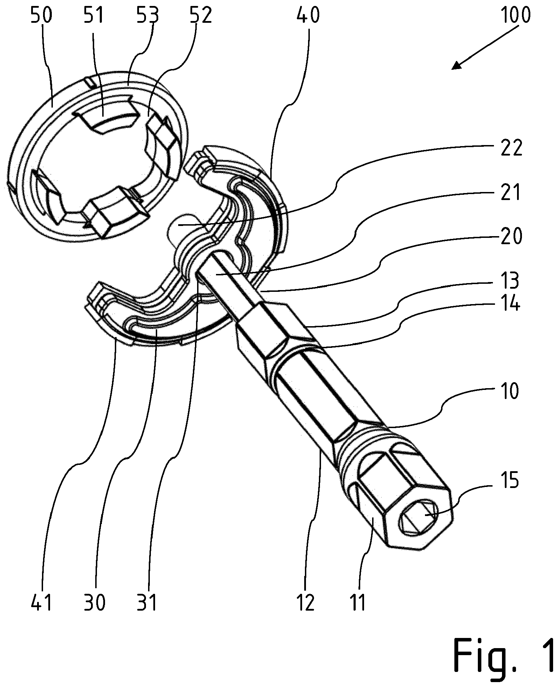

In Figur 1 ist eine Armaturenbefestigungsvorrichtung 100 in einer bevorzugten Ausführungsform dargestellt. Dieser umfasst in der Grundkonfiguration zumindest:
- eine Befestigungsscheibe 30,
- eine Ankerstange 20 und
- eine Spannmutter 10.

Als optionale Komponenten der Erfindung sind bei dieser Ausführungsform zusätzlich vorgesehen:
- ein elastomeres Zwischenelement 40 und
- ein elastomerer Zentrierring 50.

Die Spannmutter 10 gliedert sich in einen Antriebsabschnitt 11, der mit einer außenliegenden Schlüsselfläche oder in Form einer Sechskantmutter ausgebildet ist und/oder mit einem Innensechskant 15 versehen ist. Daran schließt sich ein Gewindeabschnitt 12 an, der ein Innengewinde aufweist und an seinem Außenumfang vorzugsweise ebenfalls mit einer Schlüsselfläche versehen bzw. als Sechskant ausgebildet ist. An den Gewindeabschnitt 12 schließt sich mit gleicher Außenkontur ein Verlängerungsabschnitt 13 an.

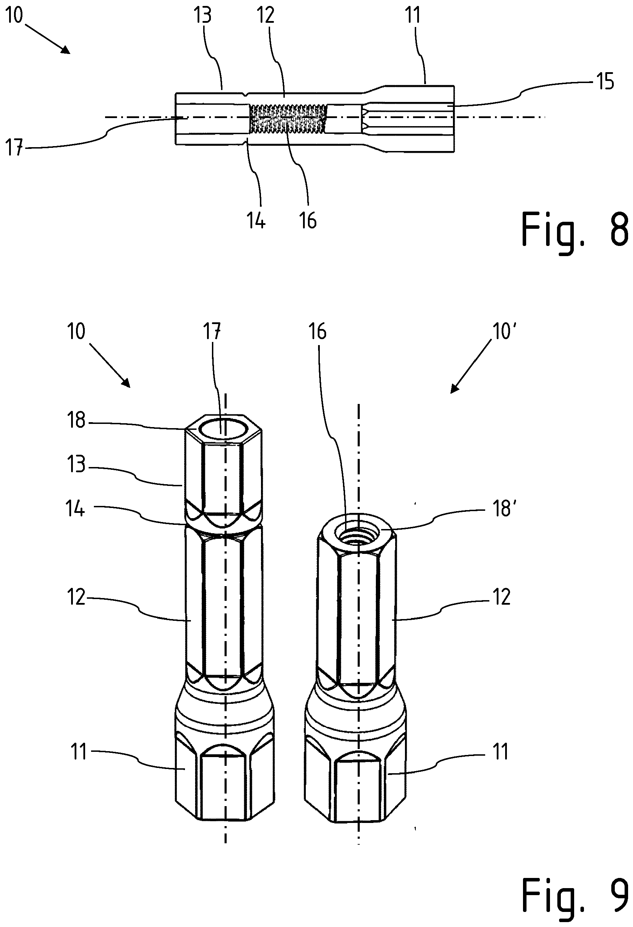

Wie die Schnittdarstellung der Spannmutter 10 in Figur 8 zeigt, gibt es darin eine durchgängige Bohrung, die nur innerhalb des Gewindeabschnitts 12 als eine Gewindebohrung 16 ausgeführt ist. Im Verlängerungsabschnitt 13 hingegen ist eine innere Bohrung 17 vorhanden, deren Innendurchmesser größer als das Nennmaß der Gewindebohrung 16 ist, sodass die Ankerstange durch den Verlängerungsabschnitt 13 hindurchgeführt werden kann, ohne dabei geschraubt werden zu müssen. Hierdurch wird die Montagezeit verkürzt.

Zwischen dem Gewindeabschnitt 12 und dem Verlängerungsabschnitt 13 ist am Außenumfang eine Rille 14 eingearbeitet, die als deutliche optische Trennung zwischen den Abschnitten 12, 13 dient und die zudem auch zur Führung beim Absägen des Verlängerungsabschnitts 13 benutzt werden kann.

Wie Figur 9 zeigt, kann die links dargestellte Spannmutter 10 nämlich mit ihren zunächst drei Abschnitten 11, 12, 13 im Bereich der Rille 14 gekürzt werden, sodass sich die rechts daneben dargestellte verkürzte Form einer Spannmutter 10' ergibt, die nur die Abschnitte 11 und 12 umfasst und bei der sich die Gewindebohrung 16 bis an die durch die Kürzung entstandene Öffnung an einer Stirnseite 18' heran erstreckt. Die Stirnseiten 18, 18' bilden jeweils eine Anlagefläche für die Befestigungsscheibe 30 und übertragen die Spannkräfte darauf.

Bei der Darstellung in Figur 1 ist eine Spannmutter 10 auf die Ankerstange 20 aufgesetzt, welche an ihrem Außenumfang mit einem Gewinde versehen ist. An wenigstens einer Seite ihres Umfangs ist durch Materialentfernung eine gegenüber dem Umkreis des Außengewindes reduzierte Querschnittsfläche ausgebildet. Bei dem dargestellten bevorzugten Ausführungsbeispiel ist die Gewindestange 20 mit Abflachungen 21 versehen, wovon die eine sichtbar ist und an der hier verdeckten rückwärtigen Seite eine weitere Abflachung gleicher Art und Länge vorhanden ist.

Auf die Ankerstange 20 ist eine Befestigungsscheibe 30 aufgesetzt. Diese besitzt einen zentralen Bereich mit einer Ausnehmung 31, in welcher die Ankerstange 20 geführt ist. Es ist zu erkennen, dass die Ausnehmung 31 ebenfalls unrund ausgebildet ist. Die Form der Ausnehmung 31 entspricht vorzugsweise der Querschnittskontur der Ankerstange 20 im Bereich der Abflachungen 21, zuzüglich eines Zuschlags zur Ausbildung eines ausreichend großen Spaltes, welcher eine freie axiale Beweglichkeit der Befestigungsscheibe 30 entlang der Ankerstange 20 gewährleistet.

Die hufeisen- bzw. spangenförmige Befestigungsscheibe 30 ist aus Metall oder einem hochfesten Kunststoff gebildet, um die hohen Klemmkräfte aufzunehmen und für eine ausreichend hohe Vorspannung zwischen der mit der Armaturenbefestigungsvorrichtung 100 an einem Untergrund zu befestigenden Waschtischarmatur 200 zu ermöglichen. Die Befestigungsscheibe 30 ist mit dem elastomeren Zwischenelement 40 überdeckt. Dieses besitzt außerdem mehrere Rastvorsprünge 41, sodass das Zwischenelement 40 die Befestigungsscheibe 30 formschlüssig aufnehmen kann. Damit wird eine Einheit gebildet und eine Verdrehung zwischen der Befestigungsscheibe 30 und der Zwischenscheibe 40 verhindert.

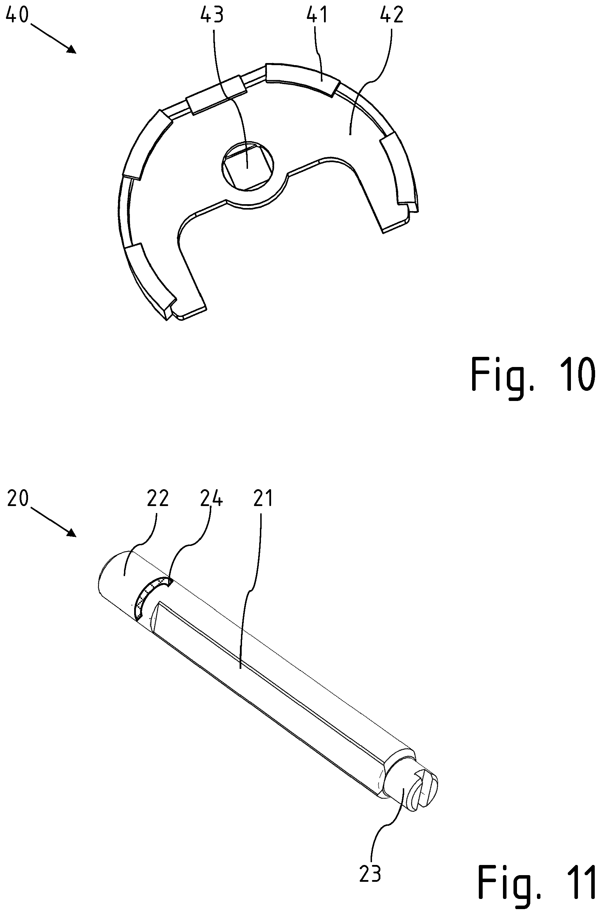

Die Zwischenscheibe 40 ist in Figur 10 einzeln dargestellt. Sie besitzt eine Basis 42 mit einem Rand, welcher mit den Vorsprüngen 41 zur Aufnahme der Befestigungsscheibe 30 ausgebildet ist. Eine Führungsausnehmung 43 in der Basis 42 ist unrund gestaltet, vorzugsweise quadratisch. Der Inkreis der Führungsausnehmung 43 ist in jedem Fall kleiner als der Umkreis der Ankerstange 20.

Die Ankerstange 20 ist in Figur 11 im Detail in einer perspektivischen Ansicht dargestellt. An einem Ende, welches zur Verankerung im Gehäuse einer Waschtisch- oder Küchenarmatur dient, ist ein Ankerkopf 22 ausgebildet. In diesem Bereich erstreckt sich das Gewinde über den gesamten Umfang, um eine ausreichend feste Verankerung zu erreichen.

Über den Großteil der Länge ist das Außengewinde durch zwei an gegenüberliegenden Seiten ausgebildete Abflachungen 21 unterbrochen, sodass sich in diesem Abschnitt ein unrunder Querschnitt ergibt, bei dem aber zwei gegenüberliegende Segmente des Außengewindes erhalten geblieben sind.

An dem anderen Ende, welches bei montierter Armaturenbefestigungsvorrichtung von der Waschtischarmatur abgewandt ist, ist ein zusätzlicher Antrieb 23 ausgebildet, in diesem Fall ein Schlitzantrieb. Über den Antrieb 23 kann die Ankerstange 20 in die Waschtischarmatur eingeschraubt werden. Die Wahl eines Schlitzantriebs hat den Vorteil, dass die Winkellage entweder durch Sicht auf den Antrieb 23 einsehbar oder durch die Stellung des darin eingesetzten Schraubendrehers haptisch erkennbar ist. Die Schlitzausnehmung des Antriebs 23 erstreckt sich dabei bevorzugt parallel zu den Abflachungen 21. Zwischen dem mit den Abflachungen 21 versehenen Abschnitt und dem Ankerkopf 22 ist eine Rändelung 24 in das Außengewinde eingeprägt. In der Rändelung 24 sind die Gewindestege teilweise zerstört. Da die Ankerstange 20 bevorzugt aus Messing gebildet ist, bleibt der gerändelte Bereich verformbar.

Beim Eindrehen des Ankerkopfes 22 in eine Aufnahme im Armaturengrundkörper wird irgendwann die Rändelung 24 erreicht, in welche sich die Gewindegänge der Aufnahme eingraben. In der Rändelung erfolgt somit eine plastische Verformung, durch welche die Ankerstange 20 in der Waschtischarmatur dauerhaft festgelegt wird. Gegen unbeabsichtigtes Verdrehen oder Lockern ist die Ankerstange 20 damit gesichert. Die gute Verformbarkeit der Rändelung 24 erlaubt es, nach dem ersten anfänglichen Festklemmen die Ankerstange 20 noch soweit drehen zu können, dass die gewünschte Winkellage eingestellt werden kann.

Bei einer üblichen Ausstattung der Ankerstange 20 mit einem metrischen Gewinde M8 sollte sich die Rändelung 24 über wenigstens zwei übereinanderliegende Gewindegänge, vorzugsweise über drei Gewindegänge, erstrecken.

Schaut man nochmals auf die in Figur 1 dargestellte Armaturenbefestigungsvorrichtung 100, so ist als optionale Ergänzung noch der Zentrierring 50 zu nennen, der auf der Oberseite einer Möbelplatte, eines Spülbeckens oder eines Waschbeckens angeordnet wird. Dieser besitzt einen ringförmigen Grundkörper, der in eine zylindrische Ausnehmung am Fuße eines Armaturengrundkörpers einklemmbar ist. Der Zentrierring 50 besteht vorzugsweise vollständig aus einem elastomeren Werkstoff und hat einen angeformten Dichtring 53. Zentriervorsprünge 51 dienen dazu, in das Hahnloch einzugreifen und die Armatur diesem gegenüber zentriert zu halten.

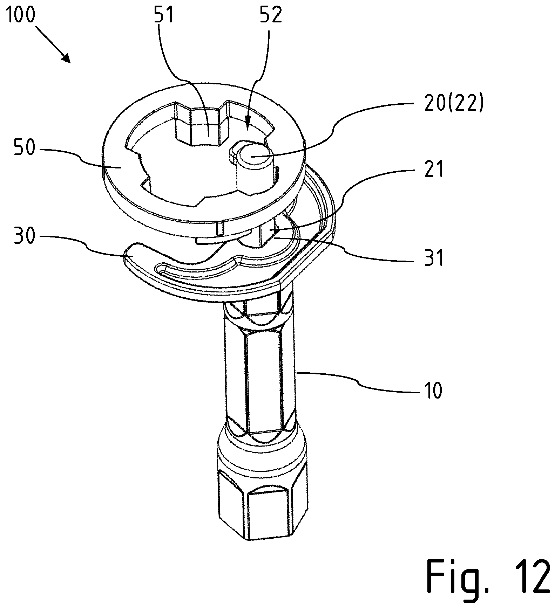

Die Zwischenräume 52 sind in besonderer Weise dimensioniert. Wie nämlich die weitere Darstellung von Teilen der Armaturenbefestigungsvorrichtung 100 in Figur 12 zeigt, sind diese mindestens so breit, dass die Ankerstange 20 problemlos zwischen zwei Vorsprüngen 51 positioniert werden kann.

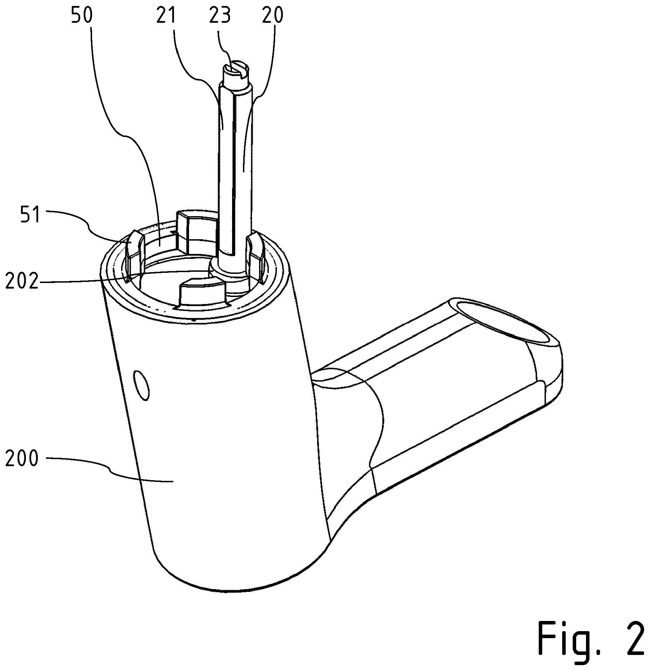

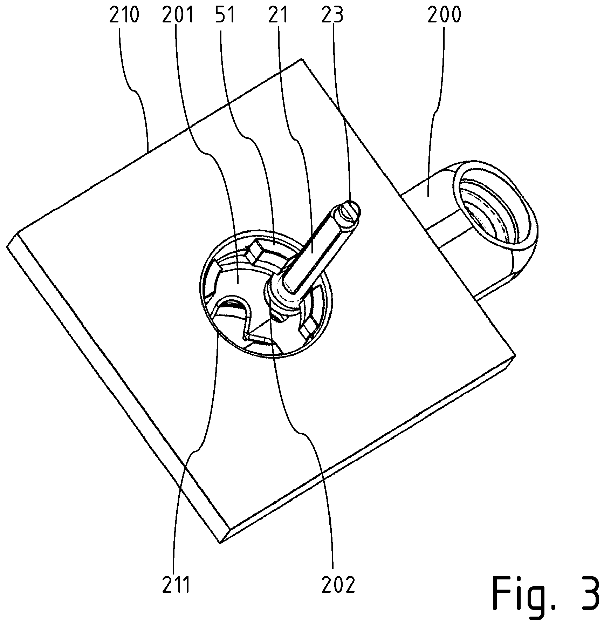

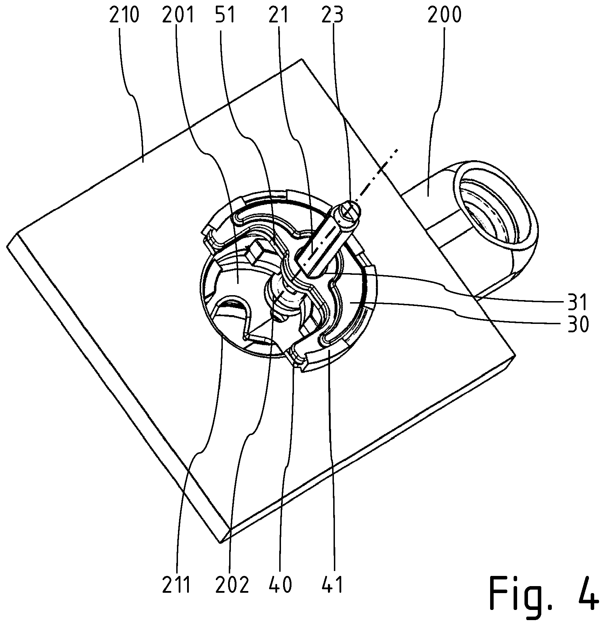

Figur 2 zeigt einen ersten Montageschritt der Armaturenbefestigungsvorrichtung 100 an einer Waschtischarmatur 200, von der hier und in den folgenden Figuren 3 bis 5 lediglich ein Grundkörper dargestellt ist. Die perspektivische Ansicht ist dabei stets von schräg unten, also von der Befestigungsseite her, gewählt.

In Fig. 2 wurde zunächst die Ankerstange 20 in eine Aufnahme 202 in der Waschtischarmatur 200 eingeschraubt und über den Antrieb 23 wurde die korrekte Winkellage zwischen den Abflachungen 21 an der Ankerstange 20 und der Waschtischarmatur 200 eingestellt. In den nach unten offenen Fußbereich der Waschtischarmatur 200 ist der Zentrierring 50 eingesetzt.

Im nächsten Montageschritt gemäß Figur 3 wird die Waschtischarmatur 200 mit den montierten Teilen 20, 50 der Armaturenbefestigungsvorrichtung 100 in ein Hahnloch 211 eines Waschtisches 210 eingesetzt. Die Zentriervorsprünge 51 greifen in das Hahnloch 211 ein. Sichtbar ist bei der Darstellung auch eine Basisplatte 201 der Waschtischarmatur 200, die neben Durchführungen für Wasserschläuche auch die Aufnahme 202 für die Ankerstange 20 aufweist.

Beim nächsten Schritt wurde die Kombination aus der Befestigungsscheibe 30 und dem elastomeren Zwischenelement 40 von dem Ende mit dem Antrieb 23 ausgehend auf die Ankerstange 20 aufgesetzt und bis an die Unterseite der Waschtischplatte 210 geschoben. Aufgrund des unrunden Querschnitts der Ankerstange 20 in dem unterhalb der Waschtischplatte 210 heraus tretenden Längenabschnitt und der dazu kompatiblen, ebenfalls unrunden Führungsausnehmung 31 in der Befestigungsscheibe 30 ist keine wesentliche Veränderung der Winkellage zwischen Befestigungsscheibe 30 und der Waschtischarmatur 200 möglich.

Da die Befestigungsscheibe 30 und das elastomere Zwischenelement 40 formschlüssig zu einer Einheit verbunden sind und das Zwischenelement 40 bevorzugt eine kleine quadratische Ausnehmung 43 besitzt (vgl. Fig. 10), deren Inkreis kleiner ist als der Umkreis des Gewindes an der Ankerstange 20, klemmt das Zwischenelement 40 auf der Ankerstange 20, und die Teile 30, 40 werden miteinander an der Ankerstange 20 gehalten. Der Monteur hat damit für die weiteren Schritte beide Hände frei.

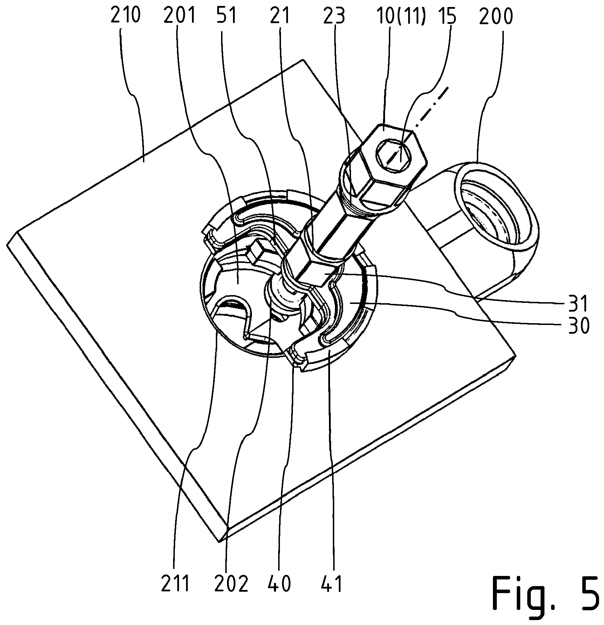

Den nächsten Schritt zeigt Figur 5. Dort ist die Spannmutter 10 auf die Ankerstange 20 aufgesetzt worden. Der Verlängerungsabschnitt 13 kann dabei zunächst einfach über die Ankerstange 20 hochgeschoben werden, bis das Innengewinde in den Gewindeabschnitt 12 greift. Dann muss der restliche Weg durch Drehen der Spannmutter 10 zurückgelegt werden, bis die Stirnseite der Spannmutter 10 fest an der Befestigungsscheibe 30 anliegt. Dieser Schritt kann von Hand erledigt werden. Der Monteur benutzt dann abschließend ein Gabel- oder Rollgabelschlüsselwerkzeug, um die Spannmutter 10 über den Außensechskant zu drehen, oder er benutzt einen Innensechskantschlüssel für den weiteren Antrieb 15. Die Spannmutter 10 wird damit in Richtung der Waschtischarmatur 200 bewegt. Zwischen Spannmutter 10 und Waschtischarmatur 200 werden der elastomere Zentrierring 50, die Waschtischplatte 210, das elastische Zwischenelement 40 und die Befestigungsscheibe 30 aneinandergedrückt. Die elastomeren Elemente 40, 50 gleichen Unebenheiten aus und verhindern darüber zu hohe lokale Flächenpressungen. Die elastische Verformung führt zudem zu einer Federkraft, welche die Verschraubung sichert.

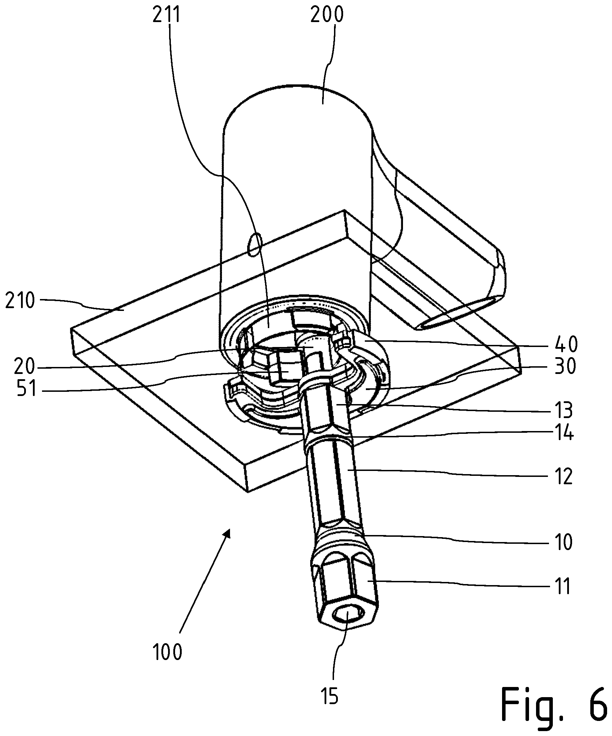

Die fertig an einem Waschtisch 210 mittels der Armaturenbefestigungsvorrichtung 100 montierte Waschtischarmatur 200 ist in Figur 6 dargestellt, wobei der Waschtisch 210 transparent dargestellt ist. Die hufeisenförmige Befestigungsscheibe 30 liegt beidseits der Hahnlochausnehmung 211 sicher an der Unterseite der Waschtischplatte 210 an. Deren Lage ist während und nach der Montage einerseits durch die formschlüssige Kopplung zwischen Ankerstange 20 und Befestigungsscheibe 30 gesichert und wird zusätzlich über den optional in den Fuß der Waschtischarmatur 200 einsetzbaren Zentrierring 50 zusätzlich verbessert.

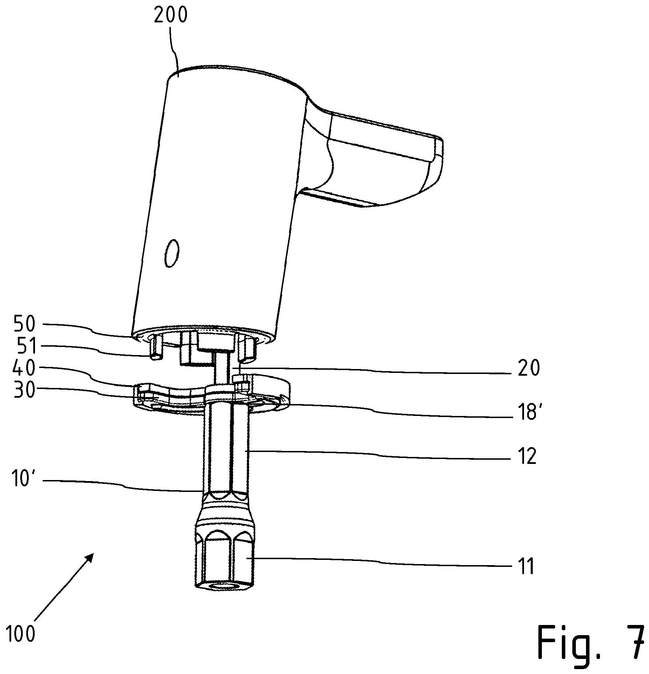

Figur 7 zeigt eine zu Fig. 6 sehr ähnliche Montagesituation. Der Waschtisch ist hier nicht dargestellt. Der Unterschied der dargestellten Ausführungsform zu der zuvor beschriebenen liegt darin, dass eine verkürzte Spannmutter 10' eingesetzt ist. Die Kürzung der Spannmutter 10' um den Verlängerungsabschnitt 13 (vgl. Fig. 9) wird vorgenommen, wenn die Wandstärke des Waschtisches bzw. der Möbelplatte sehr groß ist und nur ein entsprechend kurzer Abschnitt der Ankerstange 20 unten daraus herausragt. Durch die Verkürzung der Spannmutter 10' wird erreicht, dass diese sofort in das Gewinde der Ankerstange 20 eingreift und dadurch ausreichend viele Gewindegänge im Eingriff sind, um die Spannkräfte übertragen zu können.

Grundsätzlich ist für diesen Montagefall alternativ zwar auch eine längere Ankerstange möglich. Da letztere aber aus Metall besteht, während die Spannmutter als Spritzgießteil aus Kunststoff gefertigt werden kann, sprechen sowohl wirtschaftliche Überlegungen wie auch die einfachere Bearbeitbarkeit unter Baustellenbedingungen beim Kunststoffteil dafür, mit einer einheitlichen Länge der Ankerstange 20 zu arbeiten und die Spannmutter 10 bedarfsweise in der Länge anpassbar zu gestalten.

## Patentansprüche

1. Armaturenbefestigungsvorrichtung (100) zur Befestigung einer Waschtisch- oder Küchenarmatur (200) in einem Hahnloch (211), wenigstens umfassend:
- eine Ankerstange (20), die wenigstens über einen Teil ihrer Länge mit einem Außengewinde versehen ist und die an ihrem einen Ende mit einem Ankerkopf (22) zur Verbindung mit einem Armaturenkörper (200) versehen ist;
- eine spangenförmige Befestigungsscheibe (30), die wenigstens eine Führungsausnehmung (31) aufweist, in der die Ankerstange (20) geführt ist;
- eine Spannmutter (10; 10') mit wenigstens einem in das Außengewinde der Ankerstange (20) eingreifenden Innengewinde (16) und mit wenigstens einem Antrieb (15);
**dadurch gekennzeichnet, dass** der Querschnitt der Ankerstange (20) über wenigstens einen Teilbereich ihrer Länge und der Querschnitt der Führungsausnehmung (31) derart ausgebildet und aufeinander abgestimmt sind, dass sie in wenigstens einer Winkellage formschlüssig zueinander ausgerichtet sind und zugleich axial gegeneinander verschiebbar sind,
wobei der Querschnitt des Teilbereichs der Ankerstange (20) und der Querschnitt der Führungsausnehmung (31) jeweils eine gegenüber der Kreisform reduzierte, unrunde Form aufweisen, und wobei in den genannten Querschnitten ein oder mehrere kreisbogenförmige(r) Abschnitte) des Außengewindes verbleiben, wodurch Abstützpunkte für die Führung der Spannmutter (10; 10') gebildet sind.

2. Armaturenbefestigungsvorrichtung (100) nach Anspruch 1, **dadurch gekennzeichnet, dass** die Querschnitte der Führungsausnehmung (31) und des Teilbereichs der Ankerstange (20) jeweils eine einseitige Nut oder Abflachung (21) aufweisen und dass an der Ankerstange (20) ein Gewindeabschnitt ausgebildet ist, der sich über mehr als 200° erstreckt.

3. Armaturenbefestigungsvorrichtung (100) nach Anspruch 1, **dadurch gekennzeichnet, dass** die Querschnitte der Führungsausnehmung (31) und des Teilbereichs der Ankerstange (20) jeweils zwei Abflachungen (21) an gegenüberliegenden Seiten aufweisen, wobei an der Ankerstange (20) zwei Gewindeabschnitte vorhanden sind, die sich jeweils über mindestens 15° erstrecken und die spiegelbildlich zueinander angeordnet sind.

4. Armaturenbefestigungsvorrichtung (100) nach Anspruch 1, **dadurch gekennzeichnet, dass** die Querschnitte der Führungsausnehmung (31) und des Teilbereichs der Ankerstange (20) jeweils drei oder mehr Abflachungen aufweisen, wobei an der Ankerstange jeweils zwischen einem Paar benachbarter Abflachungen ein Gewindeabschnitt vorhanden ist und die Gewindeabschnitte Stützpunkte, die in gleichmäßiger Winkelteilung wie die Ecken eines Polygons angeordnet sind, für die Spannmutter bilden.

5. Armaturenbefestigungsvorrichtung (100) nach einem der vorhergehenden Ansprüche, **gekennzeichnet durch** ein in den Bodenbereich eines unten offenen Armaturenkörpers einsetzbares Zentrierelement (50), das mehrere Zentriervorsprünge (51) zum Eingriff in das Hahnloch (211) aufweist.

6. Armaturenbefestigungsvorrichtung (100) nach Anspruch 5, **dadurch gekennzeichnet, dass** das Zentrierelement (50) wenigstens einen angeformten Dichtring (53) aus einem elastomeren Werkstoff aufweist.

7. Armaturenbefestigungsvorrichtung (100) nach einem der vorhergehenden Ansprüche, **dadurch gekennzeichnet, dass** auf einer dem Armaturenkörper (200) zuzuwendenden Oberseite der Befestigungsscheibe (30) ein elastomeres Zwischenelement (40) angeordnet ist.

8. Armaturenbefestigungsvorrichtung (100) nach Anspruch 7, **dadurch gekennzeichnet, dass** das Zwischenelement (40) eine zentrisch zur Führungsausnehmung (31) der Befestigungsscheibe (30) anzuordnende Führungsausnehmung (43) besitzt, deren Inkreis kleiner ist als der Umkreis des Querschnitts der Ankerstange (20).

9. Armaturenbefestigungsvorrichtung (100) nach einem der vorhergehenden Ansprüche, **dadurch gekennzeichnet, dass** die Ankerstange (20) am unteren Ende des Ankerkopfs (22) mit einer auf das Außengewinde eingeprägten Rändelung (24) versehen ist.

10. Waschtisch- oder Küchenarmatur (200) mit einer Armaturenbefestigungsvorrichtung (100) nach einem der vorhergehenden Ansprüche.

11. Waschtisch- oder Küchenarmatur (200) nach Anspruch 10, **dadurch gekennzeichnet, dass** die Ankerstange (20) am unteren Ende des Ankerkopfs (22) mit einer auf das Außengewinde eingeprägten Rändelung (24) versehen ist und dass ein Armaturengehäuse eine als Stufenbohrung ausgebildete und mit einer Gewindebohrung versehene Aufnahme (202) für den Ankerkopf (22) aufweist.
